# EUROPEAN PATENT APPLICATION

(11) **EP 2 444 594 A1**
(43) Date of publication of application: **25.04.2012**
(21) Application number: 10789033.7
(22) Date of filing: 18.06.2010
(51) Int. Cl.: F01K 3/14, F01K 1/04, F01K 1/08, F01K 1/12

(54) **SYSTEM AND METHOD FOR ACCUMULATING STEAM IN TANKS FOR SOLAR USE**

(30) Priority: 19.06.2009 ES 200901458
(71) Applicant: Abengoa Solar New Technologies, S.A., 41018 Sevilla (ES)
(72) Inventor: OLAVARRIA RODRÍGUEZ-ARANGO, Rafael, E-41018 - Sevilla (ES); GARCÍA RAMIREZ, Elena, E-41018 - Sevilla (ES); BARRAGÁN JIMÉNEZ, José, 41018 - Sevilla (ES)
(74) Representative: Garcia-Cabrerizo y del Santo, Pedro Maria
(86) International application number: PCT/ES2010/000268
(87) International publication number: WO 2010/146200

(57) **Abstract**

System and method for accumulating steam in tanks for solar use made up of two sets of Ruths tanks (1, 2), called base set and overheat set, identical to one another and each having a saturated steam inlet (3), steam injectors (10) installed inside the tank (1, 2), a steam outlet (4, 4') with a valve (13) and drainage means (11). A heat exchanger (6) is installed between the two sets of tanks (1, 2). The method of storage consists of a tank loading stage and a tank discharging stage, the latter comprising two discharging phases, the first one from a maximum to an intermediate pressure and the second one from an intermediate to a low pressure.

## Description

### TECHNICAL FIELD OF THE INVENTION

The method described in the present invention falls within the field of the accumulation of steam at high pressure, more specifically for solar thermal applications in the production of electric power.

### BACKGROUND OF THE INVENTION

Storage in solar thermal power plants for electrical energy generation is essential in order for this technology to be mature.

Storage is key to fully profit from the large investments required by solar fields. At the same time it is essential so that the production of energy from this renewable technology is seen as manageable.

Manageability is lately becoming an increasingly indispensable requirement in electric power generation plants.

The use of storage covers several purposes within a solar plant. On the one hand, it allows increasing production, both increasing the load in hours of high irradiance and extending this to the periods at night. This, mentioned before, achieves maximizing the profitability of the investment. On the other hand, it allows continuous operation even in the presence of cloud periods (transient conditions of radiation). And lastly, it allows the continuous operation of the turbine during long periods of time, thereby reducing the cycles of starting and stopping, thus decreasing the thermal stress to which this equipment is subjected.

Thermal stress is responsible for some of the most fatal failures of a turbine, which is a key and, at the same time, an expensive element of a thermoelectric plant.

The current state of the art in the accumulation of energy in solar thermal power plants is directed, to a large extent, to the accumulation via liquid means, either thermal oil, or in molten salts.

In addition to the high costs associated with these two technologies there are other drawbacks. The main drawback of the thermal oil is its environmental impact, since it is a flammable product and in a certain toxic range. Regarding the salts the drawbacks are due more to technical risks. The salts have a high risk of freezing under normal conditions of operation since they have a very high freezing point (between 140 and 230 °C). This requires a costly and complex design for the layout of piping and equipment.

With the accumulation in steam all those risks are completely eliminated and besides the cost of storing the variations of the salts and oil market becomes independent.

The solar thermal plants take advantage of the direct radiation from the sun, concentrating it and generating steam. However, solar radiation presents a variable profile that depends on a lot of factors, including cloud cover. Cloud cover makes the radiation that reaches the collector surfaces of a solar field fluctuate significantly in very short times. It is necessary that the system has a reaction time as close as possible to that of these variations to prevent these from being transmitted to the generation system or turbine, which would be fatal to its durability. The frequency of these transitory periods varies according to the location in the world, but they are in not dismissable in any case.

Unlike the salts and oil, with the accumulation in steam an almost immediate supply to the generation system or turbine is ensured.

Even so, the main disadvantage of the accumulation in steam is the cost associated with large volumes required. The present invention presents a proposal for the minimization of prices in storage making use of tanks that store in an important range of pressures with an adequate geometry.

The storage capacity of the tank is proportional to the pressure difference with which the tank works. Thus, a same volume will be used, the more is used, the greater the difference will be.

As a drawback to the increase of the pressure in the tank, a greater resistance of the buffer is needed. This translates into an increase in costs, however, this cost may be reduced if the tanks are built so that their design is optimal in terms of the distribution of stress.

Another of the drawbacks of the use of accumulation in steam is the fact that only a discharge of saturated steam is possible.

To preserve the durability of a steam turbine it is essential to maintain the conditions specified by the manufacturer. One of the most critical points in a steam turbine is the moisture content of the fluid that is expanded in the last phasing. The steam, upon being expanded from the initial state when entering the turbine, suffers a lowering of pressure accompanied by a cooling which makes the fluid lose the energy held in order to turn it into mechanical work. This loss of energy in the last phasing becomes a partial condensation. In the last phasing of the turbine, the steam stops being a dry steam to become a wet steam, which as such contains some drops of liquid water. These drops of water act as small projectiles which, in contact with the turbine blades, can damage it. That is why the last phasing of a steam turbine is designed with reinforced materials but even so, it is imperative to ensure that the moisture content of the steam does not exceed some limits, otherwise this reinforcement of the blades would not be sufficient and the turbine would be irreversibly damaged.

For this reason, the quality of the steam entering a turbine is a critical parameter. If it is a turbine that works with saturated steam, the equipment may be freely supplied with a steam of this kind since the manufacturer has carried out a suitable design for this type of inlet. However, if it is an overheated steam turbine and the turbine is supplied with steam that is not overheated (saturated steam) it is inevitable that the turbine will be damaged due to the high moisture content with which the steam would reach the last phasing.

The present invention solves all the above mentioned disadvantages by achieving an optimal steam accumulation system, as described below.

### DESCRIPTION OF THE INVENTION

The present invention proposes using steam accumulation in the solar thermal power plants for electrical energy generation by means of spherical or hemispherical tanks at high pressure, and in addition, determining the specific procedures for loading and discharging so that their capacity is optimally utilized.

Thus, the present invention proposes the accumulation of steam from a pressure greater than or equal to 100 bar to a pressure in the range of 20 bar and, to ensure that the distribution of stress that occurs in the deposits is carried out, the invention contemplates the use of spherical tanks. This type of tank allows the accumulation of steam for a certain pressure with less thickness than the one in the cylindrical tanks, which allows a significant reduction in costs, thanks to the decrease in the amount of material required.

These tanks of spherical geometry could be built both in metal or prestressed concrete or any equivalent material.

In addition, the storage system at high pressure that is presented has another additional advantage: it is capable of working not only with saturated steam but also with overheated steam.

More specifically, the accumulation of steam referred to in the present invention makes use of a Ruths system. The Ruths system consists of a deposit partly full of water in balance with steam that occupies the remainder of the volume.

The tank or accumulator is loaded using steam that is externally produced. The steam gives up its heat to the rest of the fluid in the tank, by condensation.

In the discharge of the accumulator there is a pressure drop that causes a flash evaporation in its interior, which is translated in a spontaneous generation of steam that will be subsequently discharged. One of the main characteristics of this type of discharge is that the pressure of the discharged steam decreases as the discharge progresses.

This accumulation system allows having the accumulated steam in cycle at very short times. This reaction speed that allows the accumulation of steam, versus the accumulation via other means such as salts or oil, is absolutely essential for an optimum operation of solar thermal power plants for electrical energy generation.

### DESCRIPTION OF THE DRAWINGS

In order to complete the description being made and to help to a better understanding of the features of the invention, a set of drawings is attached as an integral part of said description, wherein the following is shown as way of illustration but not limited to:

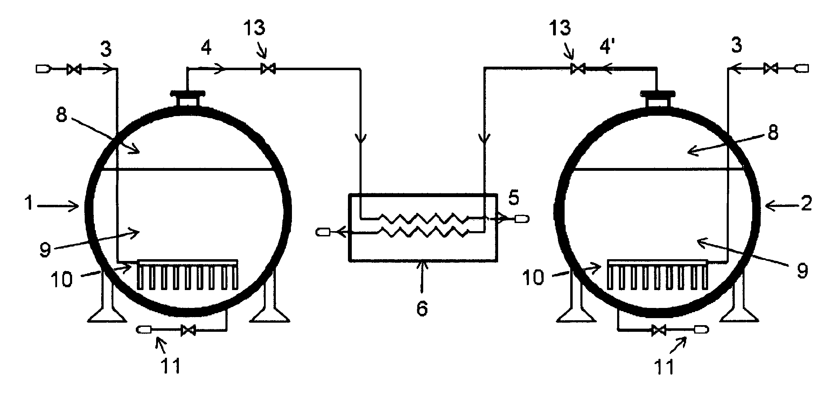

Figure 1 Steam storage system

Being the references:
(1) Base set accumulators or tanks
(2) Overheat set accumulators or tanks
(3) Steam system load
(4) Discharge flow of the base set tanks
(4') Discharge flow of the overheat set tanks
(5) Overheated steam for the turbine's supply
(6) Heat exchanger
(8) Saturated steam of the inside of the tank
(9) Saturated liquid of the inside of the tank
(10) Injectors
(11) Drainage
(13) Valves

### PREFERRED EMBODIMENT OF THE INVENTION

To achieve a greater understanding of the invention, the storage system as well as the procedure for loading and discharging, will be described below with the help of figure 1.

The storage system is composed by a set of tanks or accumulators and two heat exchangers. The specific number of tanks will be determined from the general parameters of the design of the solar thermal power plant and the characteristics of the solar resources of the installation's location.

The tanks have a Ruths-like operation as the one previously described , i.e. , the steam is being generated as the tank is being discharged.

The tanks are divided into two sets: base set (1) and overheat set (2), both sets do not differ in design thus being interchangeable.

Each type of tank has several characteristic pressures:
1. Maximum loading pressure
2. Operating pressure A
3. Operating pressure B
4. Minimum discharge pressure

The maximum loading pressure is the maximum pressure that the tank can bear when it is completely loaded. This system is designed to ensure that these pressures are greater than or in the range of 100 bar. This pressure is the same one for both types of tanks.

The operating pressures A and B are set-point values that can be varied according to the convenience of the operator. They are intermediate pressures between the maximum of load and the minimum of discharge. These should be defined for each tank keeping in mind that the flow (4') obtained from the discharge of the overheat set tanks (2) is used in a heat exchanger (6) to elevate the temperature of the resultant flow (4) from the discharge of the base set tanks (1).

The operating pressure B of the base set (1) is additionally defined by the technical minimum operation of the turbine. In this way, these pressures are necessarily different for each type of tank, in any event , complying with the following:
- Operating pressure A in base set tank (1) < Operating pressure A in overheat set tank (2)
- Operating pressure B in base set tank (1) < Operating pressure B in overheat set tank (2)

The minimum pressure of discharge is the minimum pressure to which the tank is discharged. The minimum pressure of discharge will be around 1 bar. This pressure is the same for both types of tanks (1,2).

The following describes a procedure for loading and discharging of the storage system so that two main aspects are ensured: use of steam from each tank in the full range of pressures and obtaining a overheated steam (5) for the turbine's supply. For this purpose an example is used.

The characteristic pressures of the tanks in this example are defined in the following table:

| | Base set | Overheat set |
|---|---|---|
| Maximum loading pressure | 120 bar | |
| Operating pressure A | 23 bar | 85 bar |
| Operating pressure B | 10 bar | 40 bar |
| Minimum discharge | 1.1 bar | |

### Loading Method

The loading steam of the system (3) can originate from a conventional boiler or from a boiler or solar receiver of the installation. In both cases the steam generated will be a saturated steam at the maximum load pressure. The objective of this phase is to bring the accumulators (1, 2) to a maximum load stage.

This steam (3) is introduced through the inlet and is exited to the tank by means of the injectors (10). Inside the tank, this saturated steam (8) will be in balance with the saturated liquid (9).

Due to the existence of load losses in periods of inactivity, it is necessary to carry out drains (11) during this phase so that we can move on the balance curve of the tank. These drains are sent to a deaerator or degasser.

The deaerator is a traditional element of the cycles of steam turbines that, in addition to deareate the water, works as a mixture heater that receives steam from some extractions of the turbine with the objective of preheating the water supply to the boiler (in this case the solar receiver).

### Discharging Method

The discharge is carried out in two phases:

### • Phase I or turbine phase

Phase I comprises the discharging of the accumulators (1, 2) from the maximum pressure of storage to the operating pressure B. In this phase there are two stages. In the first phase the tanks (1, 2) are discharged from the maximum pressure of load to the operating pressure A and in the second phase from the operating pressure A to the operating pressure B.

In general, the discharge of a tank of this type is characterized because the pressure constantly decreases. However, this method will have a valve (13) that will reduce the outlet pressure from each tank (4, 4') to a fixed value, equal to the minimum of each stage (operating pressure A at the first stage of phase I and operating pressure B at the second stage of this same phase)

Thus, in our example, during the first stage of this phase, the flow (4') that is obtained from an overheat tank (2) will have a constant pressure of 85 bar, while the flow (4) of the base set (1) will have a pressure of 23 bar. In the second phase, the pressures will be of 40 bar and 10 bar respectively.

This discharge pressure difference in each stage is carried out with the objective of overheating the flow of the base set (4) with that of the overheat set (4'), so as to be able to feed the turbine without problems.

In the first stage of this phase the 85 bar flow has a temperature corresponding to the saturation state of 299.23 °C, which will be sufficient to overheat the 23 bar flow which has a temperature of 219.55 °C.
Similarly, in the second stage, the 40 bar flow which is at 250.33 °C is used to overheat the 10 bar flow, whose initial temperature is 179.88 °C.

### • Phase II or preheating phase

Phase II includes the discharge of the accumulators (1, 2) from the operating pressure B to the minimum discharge pressure.

Once all accumulators (1, 2) have been discharged to the operating pressure B, the remaining accumulated steam (8) will be used in the next day operation. Given that the available pressures are already very low in order to feed the turbine, this steam will be used in places of the cycle where high pressures are not necessary.

With this phase, the capacity of the tank is used almost in its entirety. The steam that remains accumulated (8) could be used in multiple ways, subsequently, one of the most intuitive ones is described.

In the operation of the next day, we will find the tanks (1, 2) at a pressure slightly smaller than the corresponding operating pressure B. This is due to the losses that occur at night. In any case, they will be at a sufficient pressure for the next operation. The accumulators (1, 2) will be discharged to the minimum pressure using this steam (4, 4') in two applications ( not represented in figure 1):
1. Part of the tanks will be discharged in the last of the extractions (5) of the turbine. To maintain the balance of masses in the cycle and once that steam (8) is used in the extraction, it will be carried to another tank called condensed storage tank and it will be used to feed the tanks or accumulators.
2. The other part of steam (8) that remains in the tanks will be discharged by passing the flow through a second exchanger. In this exchanger the heat will be used in the preheating of the water that will supply the solar receiver. As in the previous case, in order to maintain the mass balance in the cycle, once this flow is used it will be carried to the condensed storage tank.

The condensed storage tank is the equipment that stores the water that is used for loading the storage tank. The water in the loading process exits the condensed storage tank, goes through an exchanger that increases its temperature and is then fed into the deaerator of the steam turbine's cycle. From there it will go through the preheaters of the cycle until arriving at the boiler (in this case a solar receiver) and once the steam reaches the loading conditions, it will be carried to the storage tanks just as it was explained in the loading process.

## Claims

1. System for accumulating steam in tanks for solar use **characterized in that** it is made up of two sets of Ruths tanks, called base set (1) and overheat set (2), identical to one another and each having a saturated steam inlet (3), steam injectors (10) installed inside the tank (1, 2), a steam outlet (4, 4') with a valve (13) and drainage means (11); a heat exchanger (6) is installed between the two sets of tanks (1, 2).

2. System for accumulating steam according claim 1 **characterized in that** the tanks have a spherical geometry.

3. System for accumulating steam according claim 1 **characterized in that** the tanks could be built both in metal or prestressed concrete.

4. Method for accumulating steam for solar use in tanks as the ones previously claimed **characterized in that** it involves a loading phase of the system and another discharging stage wherein:
• In the loading phase of the tanks or accumulators (1, 2) the objective is to bring these to a maximum load stage. To achieve this, saturated steam is introduced in the tanks (1, 2) through the injectors (10). Inside the tank, this saturated steam (8) will be in balance with the saturated liquid (9). If there are any load variations, drainage (11) that will be sent to a deaerator, can be performed.
• The discharge stage is carried out in two phases:
- Phase I or turbine phase: comprises the discharging of the tanks or accumulators (1, 2) from maximum pressure of storage to intermediate operating pressure, said discharge being performed in two stages. This method will have a valve (13) that will reduce the outlet pressure from each tank (4, 4') to a fixed value, equal to the minimum of each stage, the discharge pressure of the overheat tank (2) being always higher than that of the base set tank (1) Through a heat exchanger (6), the steam of the base set tank (4) is overheated with the one in the overheat set (4') to feed the turbine.
- Phase II or preheating phase: comprises the discharge of the tanks (1, 2) from the intermediate pressure to the minimum discharge pressure. Once all the tanks (1, 2) have been discharged to the intermediate pressure, the accumulated steam remaining (8) will be used in the next day's operation where the tanks (1, 2) will be discharged to the minimum pressure using this steam (4, 4') for different applications

5. Method for accumulating steam in tanks for solar use according claim 4 **characterized in that** one of the possible applications for using the steam, when it drops from the intermediate pressure to the minimum pressure, is to discharge part of the accumulators (1, 2) in the turbine and, once that steam is used in the turbine, carry it to another tank (condensed storage tank) and use it to feed the accumulators (1, 2); the other part of remaining steam in the accumulators (1, 2) is discharged by passing it through a heat exchanger to preheat the water that feeds the solar receiver; when exiting the heat exchanger, the steam is also carried to the condensed storage tank.

6. Method for accumulating steam in tanks for solar use according claim 4 **characterized in that** the saturated steam which is introduced into the system (3) can come from both a conventional boiler or a solar receiver, being the steam generated in both cases a saturated steam at the maximum load pressure.
